(19) **Europäisches Patentamt European Patent Office Office européen des brevets**

(11) **EP 4 387 156 B1**

(12) **EUROPEAN PATENT SPECIFICATION**

(45) Date of publication and mention of the grant of the patent:
**25.02.2026 Bulletin 2026/09**

(21) Application number: **23214876.7**

(22) Date of filing: **07.12.2023**

(51) International Patent Classification (IPC):
**H04L 9/00** (2022.01)    **H04L 9/30** (2006.01)

(52) Cooperative Patent Classification (CPC):
**H04L 9/004; H04L 9/3093**

(54) **EFFICIENT FAULT COUNTERMEASURE THROUGH POLYNOMIAL EVALUATION**

EFFIZIENTE FEHLERGEGENMASSNAHME DURCH POLYNOMIALE AUSWERTUNG

CONTRE-MESURE EFFICACE CONTRE LES DÉFAILLANCES PAR ÉVALUATION POLYNOMIALE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.12.2022 US 202218066862**

(43) Date of publication of application:
**19.06.2024 Bulletin 2024/25**

(73) Proprietor: **NXP B.V.**
**5656 AG Eindhoven (NL)**

(72) Inventors:
• **Fay, Björn**
**5656AG Eindhoven (NL)**
• **Schneider, Tobias**
**5656AG Eindhoven (NL)**
• **Renes, Joost Roland**
**5656AG Eindhoven (NL)**
• **Azouaoui, Melissa**
**5656AG Eindhoven (NL)**
• **Bos, Joppe Willem**
**5656AG Eindhoven (NL)**

(74) Representative: **Colaiuda, Antonella**
**NXP Semiconductors Germany GmbH**
**Intellectual Property Group**
**Beiersdorfstraße 12**
**22529 Hamburg (DE)**

(56) References cited:
**US-B2- 11 139 971**

• **DANIEL HEINZ ET AL: "Combined Fault and DPA Protection for Lattice-Based Cryptography", vol. 20210225:122259, 25 February 2021 (2021-02-25), pages 1 - 30, XP061052217, Retrieved from the Internet <URL:https://eprint.iacr.org/2021/101. pdf> [retrieved on 20210225]**

## Description

### TECHNICAL FIELD

Various exemplary embodiments disclosed herein relate generally to efficient fault countermeasure through polynomial evaluation.

### BACKGROUND

Polynomial arithmetic is a building block of many cryptographic schemes. One promising direction that uses this building block is lattice-based cryptography, that is poised to be an essential part of the future standard for post-quantum cryptography, e.g., the digital signature scheme Dilithium. As for any cryptographic scheme, implementations of lattice-based cryptography are vulnerable to physical attacks, in particular to faults injected by an attacker in the computation path. Contemporary countermeasures often require a high investment in either area, runtime or memory to provide sufficient fault protection.

US 11139971 B2 describes a method for checking results, including (a) determining a first result by conducting an operation g( ) based on test data; (b) determining combined data by performing a combining operation based on the test data and user data; (c) determin¬ ing a second result conducting the operation g( ) based on the combined data; and (d) determining whether the second result is indicative of the first result.

### SUMMARY

The invention is defined in the appended claims.

A summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various embodiments relate to a data processing system including instructions embodied in a non-transitory computer readable medium, the instructions for a fault detection in polynomial operations in a processor, the instructions, including: selecting a plurality of evaluation points; evaluating a first polynomial at the plurality of evaluation points to produce first results; applying a first function to the first polynomial to produce a second polynomial; evaluating the second polynomial at the plurality of evaluation points to produce second results; evaluating a second scalar function on the first results to produce third results; comparing the second results to the third results; and performing a polynomial operation using the second polynomial when the second results match the third results.

Various embodiments are described, further including indicating a fault when the second results do not match the third results.

Various embodiments are described, further including: evaluating a third polynomial at the plurality of evaluation points to produce fourth results, wherein applying a first function to the first polynomial to produce a second polynomial includes adding the first polynomial to the third polynomial, and wherein evaluating a second scalar function on the first results to produce third results includes adding the first results to the fourth results.

Various embodiments are described, further including: evaluating a third polynomial at the plurality of evaluation points to produce fourth results; wherein applying a first function to the first polynomial to produce a second polynomial includes multiplying the first polynomial and the third polynomial; and wherein evaluating a second scalar function on the first results to produce third results includes multiplying the first results by the fourth results.

Various embodiments are described, further including: selecting a plurality of coefficients for a third polynomial; evaluating the third polynomial at the plurality of evaluation points to produce fourth results; updating the first polynomial by adding the third polynomial to the first polynomial; and updating the first results by adding the fourth results to the first results.

Various embodiments are described, further including: applying a third function to the third polynomial, wherein the third function is based upon the first function to produce a fourth polynomial; evaluating the fourth polynomial at the plurality of evaluation points to produce fifth results; updating the first polynomial by subtracting the fourth polynomial from the first polynomial; and updating the first results by subtracting the fifth results to the first results.

Various embodiments are described, wherein selecting a plurality of evaluation points includes randomly selecting the plurality of evaluation points.

Various embodiments are described, wherein selecting a plurality of evaluation points includes deterministically selecting the plurality of evaluation points.

Various embodiments are described, wherein the first and second polynomials are defined over a ring $R[X]/(f(X))$.

Various embodiments are described, wherein the first and second polynomials are defined over a ring $R[X]/(X^n +$

1) and wherein selecting a plurality of evaluation points include selecting roots of unities.

Further various embodiments relate to a method of detecting faults in a polynomial operation, including: selecting a plurality of evaluation points; evaluating a first polynomial at the plurality of evaluation points to produce first results; applying a first function to the first polynomial to produce a second polynomial; evaluating the second polynomial at the plurality of evaluation points to produce second results; evaluating a second scalar function on the first results to produce third results; comparing the second results to the third results; and performing a polynomial operation using the second polynomial when the second results match the third results.

Various embodiments are described, further including indicating a fault when the second results do not match the third results.

Various embodiments are described, further including: evaluating a third polynomial at the plurality of evaluation points to produce fourth results, wherein applying a first function to the first polynomial to produce a second polynomial includes adding the first polynomial to the third polynomial, and wherein evaluating a second scalar function on the first results to produce third results includes adding the first results to the fourth results.

Various embodiments are described, further including: evaluating a third polynomial at the plurality of evaluation points to produce fourth results; wherein applying a first function to the first polynomial to produce a second polynomial includes multiplying the first polynomial and the third polynomial; and wherein evaluating a second scalar function on the first results to produce third results includes multiplying the first results by the fourth results.

Various embodiments are described, further including: selecting a plurality of coefficients for a third polynomial; evaluating the third polynomial at the plurality of evaluation points to produce fourth results; updating the first polynomial by adding the third polynomial to the first polynomial; and updating the first results by adding the fourth results to the first results.

Various embodiments are described, further including: applying a third function to the third polynomial, wherein the third function is based upon the first function to produce a fourth polynomial; evaluating the fourth polynomial at the plurality of evaluation points to produce fifth results; updating the first polynomial by subtracting the fourth polynomial from the first polynomial; and updating the first results by subtracting the fifth results to the first results.

Various embodiments are described, wherein selecting a plurality of evaluation points includes randomly selecting the plurality of evaluation points.

Various embodiments are described, wherein selecting a plurality of evaluation points includes deterministically selecting the plurality of evaluation points.

Various embodiments are described, wherein the first and second polynomials are defined over a ring $R[X]/(f(X))$.

Various embodiments are described, wherein the first and second polynomials are defined over a ring $R[X]/(X^n + 1)$ and wherein selecting a plurality of evaluation points include selecting roots of unities.

Further various embodiments relate to a data processing system including instructions embodied in a non-transitory computer readable medium, the instructions for a fault detection in polynomial operations in a processor, the instructions, including: selecting a plurality of evaluation points; evaluating a first polynomial at the plurality of evaluation points to produce first results; decomposing the first polynomial into a second polynomial and a third polynomial wherein the first polynomial equals the second polynomial plus alpha times the third polynomial wherein alpha is an integer; evaluating the second polynomial at the plurality of evaluation points to produce second results; evaluating the third polynomial at the plurality of evaluation points to produce third results; calculating fourth results by adding the second results to alpha times the third results; comparing the first results to the fourth results; and performing a polynomial operation using the second polynomial and third polynomial when the first results match the fourth results.

Various embodiments are described, further including indicating a fault when the first results do not match the fourth results.

## BRIEF DESCRIPTION OF THE DRAWINGS

In order to better understand various exemplary embodiments, reference is made to the accompanying drawings, wherein:

FIG. 1 illustrates an example of a sequence of functions $F^{(0)}$, $F^{(1)}$, ... applied to a polynomial $P(X)$, or their corresponding scalar functions $F_y^{(0)}, F_y^{(1)}$ ,... applied after evaluating $P$ at **x**;

FIG. 2 illustrates a more complex calculation involving refresh algorithms;

FIG. 3 illustrates a comparison between the embodiments disclosed herein and a re-computation based fault countermeasure for different values of the parameter m which corresponds to the detection of $m$ faults; and

FIG. 4 illustrates an exemplary hardware diagram for implementing the various fault detection algorithms disclosed herein.

To facilitate understanding, identical reference numerals have been used to designate elements having substantially the same or similar structure and/or substantially the same or similar function.

## DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or (*i.e.,* and/or), unless otherwise indicated (*e.g.,* "or else" or "or in the alternative"). Also, the various embodiments described herein are not necessarily mutually exclusive, as some embodiments can be combined with one or more other embodiments to form new embodiments.

Polynomial arithmetic is a building block of many cryptographic schemes. One promising direction that uses this building block is lattice-based cryptography, that is poised to be an essential part of the future standard for post-quantum cryptography, e.g., the digital signature scheme Dilithium. As for any cryptographic scheme, implementations of lattice-based cryptography are vulnerable to physical attacks, in particular to faults injected by an attacker in the computation path. Contemporary countermeasures often require a high investment in either area, runtime, or memory to provide sufficient fault protection. In the embodiments described herein, an efficient fault detection mechanism based on polynomial evaluation is proposed that introduces an overhead that is significantly lower than the state-of-the-art. This enables the efficient and fault-protected implementation of lattice-based cryptography.

Typical countermeasures against implementation attacks are expensive. For instance, re-computation, which is the ad hoc countermeasure against fault injection attacks, implies doubling the cost of the operations to achieve full protection against single faults. When generalized to protect against multiple fault injections, its overhead is linear in the number of faults. Still, a factor that grows linearly can be quite significant when considering arithmetic of large polynomials, e.g., for lattice-based cryptography, resulting in expensive implementations.

Other countermeasures include control flow integrity measures which do not protect against value based faults. Countermeasures aiming to randomize the order of operations such as shuffling or the location of the fault such as random delays do not thwart random faults aimed to perform differential fault attacks. Consistency checks can also be used to check the sparseness, the distribution, or the structure of intermediates, but this does not apply to all intermediates and to random faults. Recent proposals make use of the Chinese remainder theorem or residue number systems to detect faults, however these countermeasures are significantly more expensive than the embodiments described herein.

Besides algorithmic countermeasures, there are also proposals that rely on physical shielding or sensors to prevent or detect injected faults. This direction is orthogonal to the embodiments described herein and may be straight-forwardly combined with the embodiments described herein, if required.

The fault detection embodiments described herein detect injected faults with a significantly lower overhead in both runtime and memory consumption than the current state-of-the-art.

In the fault detection embodiments described herein, an efficient fault detection mechanism using polynomial evaluation is proposed. This is achieved by removing the need to store and re-compute on polynomials and instead makes use of their evaluations, which does not require costly polynomial arithmetic and only scalar operations. Initially, the application of any polynomial function F, which has a corresponding scalar function $F_y$ as defined in the following section, to a polynomial $P(X)$ (or multiple polynomials) is considered, and a generic protection scheme based on evaluations is provided. Afterwards, concrete instantiations for arithmetic operations (i.e., polynomial addition, polynomial multiplication, polynomial decomposition) common in lattice-based cryptography are provided, a new refresh scheme to overcome the 0 propagation property of the multiplication scheme is proposed, and how these gadgets can be composed securely to enable the implementation of larger, more complex circuits is described.

The core idea is to evaluate the input polynomials $P_i(X)$ at a set of evaluation points $\boldsymbol{x}$ to produce evaluation sets $\boldsymbol{y}_i = P_i(\boldsymbol{x})$, to apply the corresponding scalar function $F_y$ to the resulting scalars $\boldsymbol{y}_i$ and to compare the results to the evaluation set of the output polynomial $F(P_i(X))$ at the same evaluations points $\boldsymbol{x}$. If no fault was injected, this comparison should return true, i.e., the values are the same. This underlying structure is used for the protected gadgets for polynomial addition and polynomial multiplication. For generic polynomial decomposition, the input evaluation set is instead predicted based on the outputs. A fault detection algorithm is described that relies on similar ideas, but requires two phases to produce the correct results, i.e., in the first phase the refresh mask is added and in the second phase a corrected mask is removed to produce the correct intermediate result.

Overall, the fault detection embodiments described herein improves over the current state-of-the-art based on re-computation by not requiring storing and computing on complete redundant polynomials. Instead, fault detection embodiments described herein works with only evaluations which improves both runtime and memory consumption. In addition, the scaling to multiple faults is also linear, but with significantly smaller factors and constants than re-computation.

An embodiment of a fault injection attack countermeasure for polynomial arithmetic will now be described. Accordingly, some background related to polynomial arithmetic and the cost of polynomial operations is provided.

The polynomial ring $R[X]$ in $X$ over a ring $R$ is a defined as the set of polynomials of the form:

$$P(X) = p_0 + p_1 \cdot X + \cdots + p_n \cdot X^n = \sum_{i=0}^{n} p_i \cdot X^i$$

with $[p_0, p_1, ..., p_n] \in R$ being the coefficients of the polynomial $P$ and $n$ its degree. The substitution of $X$ with the evaluation point $x$ in $P$ is called the evaluation $y$ of $P$ at $x$. In the fault detection embodiment, a set of evaluation points denoted as $\boldsymbol{x}$ are considered that are used to produce an evaluation set $\boldsymbol{y}$ as $\boldsymbol{y} = P(x)$. Both of these sets have a cardinality of $k$, which is one of the main parameters that affects the overhead and fault coverage.

A generic fault injection attack countermeasure scheme considers any polynomial function F that has a corresponding scalar function $F_y$ with

$$P_F(\boldsymbol{x}) = F_y(P(\boldsymbol{x})), \ \text{with} \ P_F(X) = F(P(X))$$

for any polynomial $P(x)$ and evaluation points $\boldsymbol{x}$. Note that this definition can be extended to functions with multiple input and output polynomials. The important property of the function F is the existence of a corresponding scalar function $F_y$ which can predict the evaluation set of the output polynomial(s) up to a certain degree.

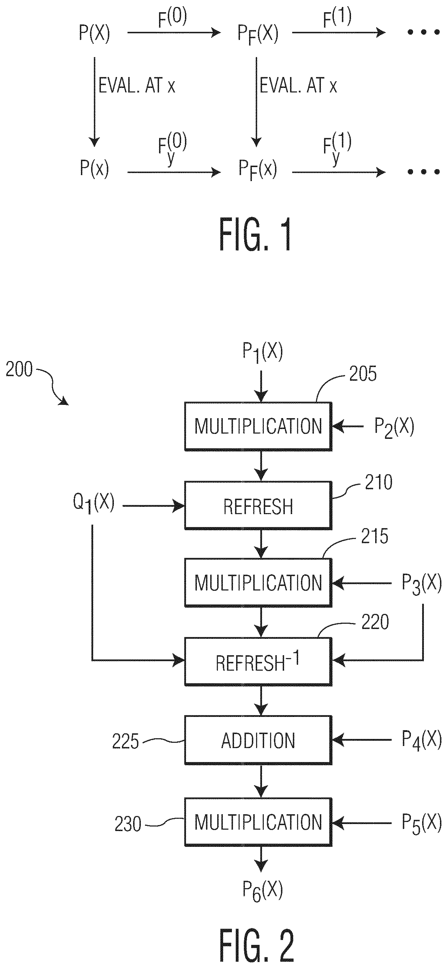

FIG. 1 illustrates an example of a sequence of functions $F^{(0)}$, $F^{(1)}$, ... applied to a polynomial $P(X)$, or their corresponding scalar functions $F_y^{(0)}$, $F_y^{(1)}$, ... applied after evaluating $P$ at $\boldsymbol{x}$. The evaluation at $\boldsymbol{x}$ can either be done at the very end after applying all functions on $P$, or at the beginning before applying all scalar functions. For appropriate choices of scalar functions, the result will be the same. The computation of scalar functions (the bottom arrows) is the additional redundancy.

In this disclosure, protection schemes for concrete instantiations of F are provided, including polynomial addition, polynomial multiplication, and polynomial decomposition. Let $P, Q \in R[X]$ be two polynomials of degree $n$ with coefficients $[p_0, p_1, ..., p_n]$ and $[q_0, q_1, ..., q_n]$, respectively. The sum of $P$ and $Q$ is a polynomial defined by:

$$P(X) + Q(X) = (p_0 + q_0) + (p_1 + q_1) \cdot X + \cdots + (p_n + q_n) \cdot X^n = \sum_{i=0}^{n} (p_i + q_i) \cdot X^i.$$

The product of P and Q is defined by the convolution:

$$P(X) \cdot Q(X) = \sum_{k=0}^{2n} c_k \cdot X^k, \text{where } c_k = \sum_{i+j=k} p_i \cdot q_j.$$

The generic decomposition $\text{Decompose}_\alpha$ of a polynomial $P$ into two polynomials $A$ and $B$ in base $\alpha$ is defined as:

$$P(X) = \alpha \cdot A(X) + B(X), \text{where } p_i = \alpha \cdot a_i + b_i$$

Note that the approach described herein is independent of the actual implementation of this function and can be instantiated with e.g., decompose from the Dilithium specification.

Regarding computation costs, an addition of two degree $n$ polynomials is computed using $n + 1$ additions over $R$. The straightforward multiplication of 2 degree $n$ polynomials is computed using $(n + 1)^2$ multiplications and $n^2$ additions. The cost of the decomposition operation depends on the ring $R$ and the decomposition base $\alpha$ but is in general linear in the degree $n$. By using Horner's rule, the evaluation of a polynomial with degree $n$ at one evaluation point requires only $n$ multiplications and $n$ additions.

In this section, a generic approach for an efficient fault detection mechanism is proposed using polynomial evaluation for a given function F. The algorithmic description of this scheme is given in Algorithm 1 below. First, a set with cardinality $k$ of evaluation points $\boldsymbol{x}$ is sampled at line 1. This may be done either completely randomly, or deterministically to improve performance, e.g., the evaluation of certain points combinations can be efficiently computed as detailed later. Next, the input polynomial $P(X)$ is evaluated at the sampled evaluations points $x$ to produce the evaluation set $y_P$ at line 2. Afterwards, the polynomial function F is applied to $P(X)$ (resp. $y_P$) to compute $Q(X)$ at line 3. Then, the scalar function $F_y$ is applied to $y_P$ to compute $Y_Q$ at line 4. Before outputting $Q(X)$, the polynomial $Q(X)$ is also evaluated at the evaluation points $x$ to produce $y_Q$' at line 5, which is then compared to the predicted evaluation set $Y_Q$ at line 6. If the comparison is true, $Q(X)$ is returned at line 7. Otherwise, the algorithm returns a notification that a fault has been detected at line 8. Note that the exact same structure applies to instantiations of F with multiple input and output polynomials. In that case, multiple evaluation sets need to be predicted and compared before the output can be safely returned.

---

**Algorithm 1** – Polynomial evaluation based fault detection

---

1: Select points $x$ randomly or deterministically

2: $y_P \leftarrow P(x)$        $\triangleright$ evaluate $P$ at $x$

3: $Q(X) \leftarrow F(P(X))$        $\triangleright$ apply function F

4: $y_Q \leftarrow F_y(y_P)$        $\triangleright$ apply scalar function $F_y$

5: $y_Q' \leftarrow Q(x)$        $\triangleright$ evaluate $Q$ at $x$

6: **if** $y_Q == y_Q'$ **then**

7:    **return** $Q(X)$

8: **return** $\perp$        $\triangleright$ fault detected

---

In addition to the generic approach described in Algorithm 1, specific Algorithms for fault-protected polynomial addition, polynomial multiplication, and polynomial decomposition functions are now provided. The algorithmic description for the three functions is provided in Algorithm 2, Algorithm 3, and Algorithm 4, respectively.

Algorithm 2 is for protected polynomial addition and follows Algorithm 1 closely. Here function F applied to the input polynomials is simply the addition of the polynomials. Further, the scalar function $F_y$ is simply the addition of the $y_1$ and $y_2$ values.

Algorithm 3 is for protected polynomial multiplication and follows Algorithm 1 closely. Here function F applied to the input polynomials is simply the multiplication of the polynomials. Further, the scalar function $F_y$ is simply the multiplication of the $y_1$ and $y_2$ values.

Algorithm 4 is for protected polynomial decomposition. In the case of polynomial decomposition, the evaluation set of the output based on the evaluation set of the input cannot be reliably predicted. Therefore, a slightly different approach is used, in which instead the evaluation set of the input is predicted based on the outputs and compared to the original. The polynomial $P(X)$ is decomposed into $P_1(X)$ and $P_0(X)$ at line 3. Then $P_1(x)$ and $P_0(x)$ are evaluated at line 4. Then the scalar function $F_y$ of $\alpha \cdot y_1' + y_0'$ is applied at line 5. As will be discussed later, this approach comes with the drawback that it always needs to include a fault check which has some implications in compositions of multiple gadgets.

**Algorithm 2** – Protected Polynomial Addition

1: Select point(s) $x$ randomly or deterministically

2: $y_1 \leftarrow P_1(x), y_2 \leftarrow P_2(x)$                            $\triangleright$ evaluate $P_1$ and $P_2$ at $x$

3: $P_3(X) \leftarrow P_1(X) + P_2(X)$                $\triangleright$ perform polynomial addition

4: $y_3 \leftarrow y_1 + y_2$

5: $y_3' \leftarrow P_3(x)$                                      $\triangleright$ evaluate $P_3$ at $x$

6: **if** $y_3 == y_3'$ **then**

7:   return $P_3(X)$

8: **return** $\perp$                                        $\triangleright$ fault detected

---

**Algorithm 3** – Protected Polynomial Multiplication

1: Select point(s) $x$ randomly or deterministically

2: $y_1 \leftarrow P_1(x), y_2 \leftarrow P_2(x)$                            $\triangleright$ evaluate $P_1$ and $P_2$ at $x$

3: $P_3(X) \leftarrow P_1(X) \cdot P_2(X)$            $\triangleright$ perform polynomial multiplication

4: $y_3 \leftarrow y_1 \cdot y_2$

5: $y_3' \leftarrow P_3(x)$                                      $\triangleright$ evaluate $P_3$ at $x$

6: **if** $y_3 == y_3'$ **then**

7:   **return** $P_3(X)$

8: **return** $\perp$                                        $\triangleright$ fault detected

---

**Algorithm 4** – Protected Polynomial Decomposition

---

1: Select point(s) $x$ randomly or deterministically

2: $y \leftarrow P(x)$           $\triangleright$ evaluate $P$ at $x$

3: $P_1(X), P_0(X) \leftarrow \mathrm{Decompose}_\alpha(P(X))$      $\triangleright$ perform decomposition

4: $y_1' \leftarrow P_1(x), y_0' \leftarrow P_0(x)$      $\triangleright$ evaluate $P_1$ and $P_0$ at $x$

5: $y' = \alpha \cdot y_1' + y_0'$

6: **if** $y == y'$ **then**

7:    **return** $P_1(X), P_0(X)$

8: **return** $\perp$ $\triangleright$ fault detected

---

The protected polynomial multiplication suffers from 0 entries in the evaluation sets which mask certain errors and can reduce the fault coverage. This property becomes even more pronounced in the compositions of multiple multiplication algorithms to implement more complex functions and can accumulate to a point where this approach no longer provides sufficient fault protection in certain scenarios. To overcome this issue, a new refresh approach is proposed. The approach first adds a random mask to the target polynomial to refresh it before the critical operation, and later removes the mask to produce the correct result.

Generic algorithmic descriptions of the two steps (i.e., *Refresh* and *Refresh$^{-1}$)* are provided in Algorithm 5 and Algorithm 6. *Refresh* (Algorithm 5) first samples a random polynomial $Q(X)$ either with completely random coefficients, or as a polynomial with a specific form to improve performance, e.g., all coefficients are set to the same random value at line 2. This polynomial is evaluated at the same evaluation points $x$ as $P(X)$ at line 3, and then both $P(X)$ and $y_P$ are refreshed by adding $Q(X)$ and $y_Q$, respectively, at lines 4 and 5. Afterwards, the refreshed polynomial $P(X)$ and evaluation set $y_P$ are returned at line 6. For *Refresh$^{-1}$* (Algorithm 6), the influence of $Q(X)$ on the target polynomial and evaluation set needs to be canceled out. The function G applied in line 3 is used to implement any functions applied after the *Refresh* function and before the *Refresh$^{-1}$* function. In the trivial case, i.e., *Refresh$^{-1}$* is called directly after *Refresh*, $Q'(X) = Q(X)$ and the function G is just the identity function. However, usually there is one or multiple other calculations between the two refresh calls. In that case, it is required to correct $Q(X)$, i.e., the calculations in between need to be applied on this mask as well, and this is computed using the function G to produce the corrected $Q'(X)$. For example, if there is a multiplication with another polynomial $P_2(X)$ in between the calls, then G would compute the product of $Q(X)$ and $P_2(X)$. Note that if $Q(X)$ is a polynomial with a specific form, this multiplication is much cheaper than a complete polynomial multiplication. After $Q(X)$ has been corrected to $Q'(X)$ using the appropriate G at line 3, the refresh mask is removed from $P(X)$ at line 5 and the corresponding evaluation set $y_P$ at line 6 before $P(X)$ and $y_P$ are returned.

Note that in some use cases, the probability of evaluating a random evaluation point to 0 might be low, e.g., $\frac{256}{q} \approx 2^{-15}$ for the prime modulus $q$ and degree 256 of Dilithium. In that case, it might be preferable to rather extend the evaluation set by a few points than to rely on explicit *Refresh* and *Refresh$^{-1}$* gadgets. This might result in a more efficient implementation, while providing a probabilistic fault coverage. The scheme's parameters (e.g., cardinality $k$ or frequency of checks) affecting the coverage need to be chosen such that the probability of a successful attack is negligible.

---

**Algorithm 5** – *Refresh*

---

1: Select point(s) $x$ randomly or deterministically

2: Select coefficient(s) $[q_0, q_1, \ldots, q_n]$ randomly or deterministically

3: $y_P \leftarrow P(x), y_Q \leftarrow Q(x)$          ▷ evaluate $P$ and $Q$ at $x$

4: $P(X) \leftarrow P(X) + Q(X)$          ▷ refresh $P$ with $Q$

5: $y_P \leftarrow y_P + y_Q$          ▷ refresh evaluation set accordingly

6: **return** $P(X)$ and $y_P$

---

---

**Algorithm 6** – $Refresh^{-1}$

---

1: Select point(s) $x$ randomly or deterministically

2: Select coefficient(s) $[q_0, q_1, \ldots, q_n]$ randomly or deterministically

3: $Q'(X) \leftarrow \mathsf{G}(Q(X))$          ▷ compute corrected $Q'(X)$

4: $y_P \leftarrow P(x), y_{Q'} \leftarrow Q'(x)$          ▷ evaluate $P$ and $Q'$ at $x$

5: $P(X) \leftarrow P(X) - Q'(X)$          ▷ remove influence of $Q$ from $P$

6: $y_P \leftarrow y_P - y_{Q'}$          ▷ adapt evaluation set accordingly

7: **return** $P(X)$ and $y_P$

---

For practical use cases, multiple calculations will be composed into a larger, more complex calculations, e.g., a matrix multiplication using a sequence of polynomial additions and polynomial multiplications. The algorithms described herein may be used for this purpose, however, it is necessary to slightly adapt them. For one, the evaluation points are sampled once at the beginning of the composition and not for each calculation. In addition, the computation of the evaluation sets is done once initially for all inputs to the composition and not freshly for each calculation. Furthermore, the error check can be done for each gadget, however, it is more efficient to implement it more sparsely throughout the composition, e.g., only for the output polynomials of the complete calculation. Overall, the gadgets then only take the input polynomials and corresponding evaluation sets as input, compute the polynomial and corresponding scalar function on the polynomials and evaluation sets, and return the output polynomials and their corresponding evaluation sets. An exemplary composition of two gadgets, one addition and one multiplication, is provided in Algorithm 7. Lines 3 and 4 correspond to the addition algorithm, and Lines 5 and 6 correspond to the multiplication algorithm. Then a final single check is performed at line 8.

---

**Algorithm 7** – Example Composition of Two Algorithms

---

1: Select point(s) $\boldsymbol{x}$ randomly or deterministically

2: $\boldsymbol{y}_1 \leftarrow P_1(\boldsymbol{x}), \boldsymbol{y}_2 \leftarrow P_2(\boldsymbol{x}), \boldsymbol{y}_3 \leftarrow P_3(\boldsymbol{x})$       $\triangleright$ evaluate $P_1$, $P_2$ and $P_3$ at $\boldsymbol{x}$

3: $P_4(X) \leftarrow P_1(X) + P_2(X)$       $\triangleright$    perform    polynomial addition

4: $\boldsymbol{y}_4 \leftarrow \boldsymbol{y}_1 + \boldsymbol{y}_2$

5: $P_5(X) \leftarrow P_4(X) \cdot P_3(X)$       $\triangleright$    perform    polynomial multiplication

6: $\boldsymbol{y}_5 \leftarrow \boldsymbol{y}_4 \cdot \boldsymbol{y}_3$

7: $\boldsymbol{y}_5{}' \leftarrow P_5(\boldsymbol{x})$       $\triangleright$ evaluate $P_5$ at $\boldsymbol{x}$

8: **if** $\boldsymbol{y}_5 == \boldsymbol{y}_5{}'$ **then**

9:    **return** $P_5(X)$

10: **return** $\perp$       $\triangleright$ fault detected

---

FIG. 2 illustrates a more complex calculation involving refresh algorithms. In FIG. 2 the following calculation is carried out: $P_6(X) = (P_1(X) \cdot P_2(X) \cdot P_3(X) + P_4(X)) \cdot P_5(X)$. The calculation 200 begins by multiplying $P_1(X)$ and $P_2(X)$ 205. Then a *Refresh* is applied to the results of step 205 using $Q_1(X)$ 210. Next, $P_3(X)$ is multiplied 215 with the refreshed output of step 210. Then *Refresh*$^{-1}$ is applied at step 220. Note that *Refresh*$^{-1}$ would compute $Q_1(X) \cdot P_3(X)$ as part of G to correct the mask. The calculation 200 then adds the output of step 220 to $P_4(X)$ 225. The calculation 200 then multiplies the output of step 225 by $P_5(X)$. to produce the output $P_6(X)$ 230.

Note that for the generic polynomial decomposition, the fault does not propagate to the output due to lack of an output prediction function. Instead, it is required that these modules always implement the fault check, even if they are part of a larger composition. As decomposition is sparsely used compared to addition and multiplication in the envisioned use cases in post-quantum cryptography, this caveat does not come with a significant overhead for larger compositions.

So far, the fault detection embodiments described herein assume polynomials in $R[X]$. However, for many relevant applications of the embodiments, the polynomials are defined over a ring $R[X]/(f(X))$ with typically $f(X) = X^n + 1$. While this does not impact the correctness of disclosed algorithms for polynomial addition and decomposition, the algorithm for polynomial multiplication does not produce the correct result for arbitrary evaluation points and polynomial rings. The reduction required after the multiplication impacts the prediction function of the evaluation set. To overcome this issue for the multiplication, it is necessary to select the evaluation points such that they are roots of unities, i.e., $x^{2n} = 1$.

The proposed fault protection scheme may be easily combined with masking schemes to thwart side-channel attacks. Standard arithmetic masking works by adding a random polynomial, similar to the refresh algorithms. It also comes with the advantage of reducing the threat of the 0 propagation problem, e.g., by requiring regular refresh operations. Masked additions and multiplications are implemented similar to before and just need to apply the corresponding masked operations on the evaluation sets. Depending on the implementation, fault checks can be done share-wise and do not require additional attention, e.g., no *Refresh*$^{-1}$ before the check. Another approach uses multiplicative masking, i.e., multiplying a random polynomial instead of adding. This type of masking does not help against the 0 value problem of the multiplication but comes with a linear overhead for protected multiplications.

An example of a standard polynomial multiplication and a comparison to state-of-the-art fault detection mechanisms based on re-computation is provided in Table 1. As previously mentioned, the multiplication of two polynomials $P$ and $Q$ requires $(n + 1)^2$ multiplications and $n$ additions. A standard re-computation implies an additional overhead of $(n + 1)^2$ multiplications, $n$ additions and $n$ scalar comparisons. Instead, the algorithm embodiments disclosed herein include an additional cost of 3 polynomials evaluations, 1 scalar multiplication and 1 scalar comparison, which only corresponds to $3n + 1$ multiplications, $3n$ additions, and 1 scalar comparison. A summary and the overheads to protect against $m$ faults are provided in Table 1. The number of scalar comparisons is provided in the worst-case (when the fault is detected at the last comparison). Recomputing the target operation $m$ times offers similar security to using $m$ distinct evaluation points. The memory column provides the number of scalar values to store/use.

Table 1

| Cost | Multiplications | Additions | Comp. | Memory |
|---|---|---|---|---|
| Unprotected poly. mul. | $n^2 + 2n + 1$ | $n$ | 0 | $3n$ |
| w/ double comp. | $2n^2 + 4n + 2$ | $2n$ | $n$ | $4n$ |
| w/ our inv. (1 point) | $n^2 + 5n + 2$ | 4n | 1 | $3n + 3$ |
| w/ $m$ recomp. | $(m + 1) \cdot (n^2 + 2n + 1)$ | $(m + 1) \cdot n$ | $m \cdot n$ | $3 \cdot (m + 1) \cdot n$ |
| w/ our inv. ($m$ points) | $n^2 + (3m + 2) \cdot n + m + 1$ | $(3m + 1) \cdot n$ | $m$ | $3n + 3m$ |

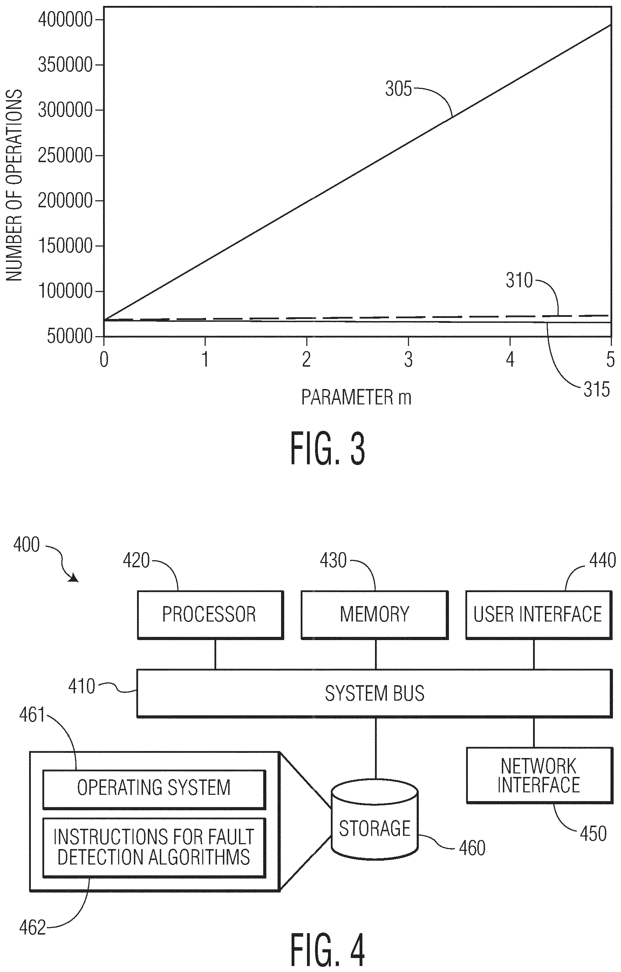

FIG. 3 illustrates a comparison between the embodiments disclosed herein and a re-computation based fault countermeasure for different values of the parameter $m$ which corresponds to the detection of $m$ faults. FIG. 3 is provided for polynomials with 256 coefficients i.e., of degree $n = 256$, which is an exemplary value for post-quantum lattice-based cryptography schemes using polynomial arithmetic. The plot 315 is for an unprotected polynomial multiplication. Plot 310 is for polynomial multiplication using the algorithm embodiments disclosed herein. Plot 305 is for polynomial multiplication using re-computation.

As previously mentioned, the evaluation of a polynomial with degree $n$ at one evaluation point requires only $n$ multiplications and $n$ additions. However, specific evaluation points can be selected to speed up the evaluation. A simple example is the evaluation of any polynomial $P$ at $x = 1$, which only requires $n$ additions (instead of $n$ multiplications and $n$ additions) to add all its coefficients.

In some cases, it is preferable to rely on specific combinations of evaluation points to simplify their joint evaluation, e.g., $x = \{0,1\}$. Then the attacker has the advantage of knowing the evaluation points before injecting the fault, which might make some attacks easier to mount, e.g., adaptively cancel out injections to avoid detection. For non-prime $q_M$, the choice of the evaluation points also heavily impacts the fault coverage. Assume a power-of-two $q_M = 16$ and $x = 4$, then all coefficients with $x^i$, $i \leq 2 = 0 \bmod q_M$ are masked in the sum and faults in them are not detectable.

FIG. 4 illustrates an exemplary hardware diagram 400 for implementing the various fault detection algorithms disclosed herein. As shown, the device 400 includes a processor 420, memory 430, user interface 440, network interface 450, and storage 460 interconnected via one or more system buses 410. It will be understood that FIG. 4 constitutes, in some respects, an abstraction and that the actual organization of the components of the device 400 may be more complex than illustrated.

The processor 420 may be any hardware device capable of executing instructions stored in memory 430 or storage 460 or otherwise processing data. As such, the processor may include a microprocessor, microcontroller, graphics processing unit (GPU), neural network processor, field programmable gate array (FPGA), application-specific integrated circuit (ASIC), or other similar devices.

The memory 430 may include various memories such as, for example L1, L2, or L3 cache or system memory. As such, the memory 430 may include static random-access memory (SRAM), dynamic RAM (DRAM), flash memory, read only memory (ROM), or other similar memory devices.

The user interface 440 may include one or more devices for enabling communication with a user. For example, the user interface 440 may include a display, a touch interface, a mouse, and/or a keyboard for receiving user commands. In some embodiments, the user interface 440 may include a command line interface or graphical user interface that may be presented to a remote terminal via the network interface 450.

The network interface 450 may include one or more devices for enabling communication with other hardware devices. For example, the network interface 450 may include a network interface card (NIC) configured to communicate according to the Ethernet protocol or other communications protocols, including wireless protocols. Additionally, the network interface 450 may implement a TCP/IP stack for communication according to the TCP/IP protocols. Various alternative or additional hardware or configurations for the network interface 450 will be apparent.

The storage 460 may include one or more machine-readable storage media such as read-only memory (ROM), random-access memory (RAM), magnetic disk storage media, optical storage media, flash-memory devices, or similar storage media. In various embodiments, the storage 460 may store instructions for execution by the processor 420 or data upon with the processor 420 may operate. For example, the storage 460 may store a base operating system 461 for controlling various basic operations of the hardware 400. The storage 460 may include instructions for carrying out the fault detection algorithms 462.

It will be apparent that various information described as stored in the storage 460 may be additionally or alternatively stored in the memory 430. In this respect, the memory 430 may also be considered to constitute a "storage device" and the storage 460 may be considered a "memory." Various other arrangements will be apparent. Further, the memory 430 and storage 460 may both be considered to be "non-transitory machine-readable media." As used herein, the term "non-transitory" will be understood to exclude transitory signals but to include all forms of storage, including both volatile and non-volatile memories.

The system bus 410 allows communication between the processor 420, memory 430, user interface 440, storage 460, and network interface 450.

While the host device 400 is shown as including one of each described component, the various components may be duplicated in various embodiments. For example, the processor 420 may include multiple microprocessors that are configured to independently execute the methods described herein or are configured to perform steps or subroutines of the methods described herein such that the multiple processors cooperate to achieve the functionality described herein. Further, where the device 400 is implemented in a cloud computing system, the various hardware components may belong to separate physical systems. For example, the processor 420 may include a first processor in a first server and a second processor in a second server.

As used herein, the term "non-transitory machine-readable storage medium" will be understood to exclude a transitory propagation signal but to include all forms of volatile and non-volatile memory. When software is implemented on a processor, the combination of software and processor becomes a single specific machine. Although the various embodiments have been described in detail, it should be understood that the invention is capable of other embodiments and its details are capable of modifications in various obvious respects.

Because the data processing implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

Any combination of specific software running on a processor to implement the embodiments of the invention, constitute a specific dedicated machine.

It should be appreciated by those skilled in the art that any block diagrams herein represent conceptual views of illustrative circuitry embodying the principles of the invention.

**Claims**

1. A data processing system comprising instructions embodied in a non-transitory computer readable medium, the instructions for detecting a fault in an application of a first function, F, to at least a first input polynomial as part of a cryptographic scheme , the instructions when executed on a processor causing the processor to:

   select a plurality of evaluation points;
   evaluate the first input polynomial at each of the plurality of evaluation points to produce first results;
   apply the first function, F, to the first input polynomial to produce a first output polynomial;
   evaluate the first output polynomial at each of the plurality of evaluation points to produce second results;

evaluate a second scalar function $F_y$ on each of the first results to produce third results, wherein the second scalar function $F_y$ corresponds to the first function F and can predict the evaluation results of the first output polynomial;
compare the second results to the third results; and
perform a polynomial operation using the first output polynomial when the second results match the third results.

2. The data processing system of claim 1, further comprising indicating a fault when the second results do not match the third results.

3. The data processing system of claim 1 or 2, further comprising:

evaluating a third polynomial at the plurality of evaluation points to produce fourth results,
wherein applying the first function to the first input polynomial to produce the first output polynomial includes adding the first input polynomial to the third polynomial, and
wherein evaluating the second scalar function on the first results to produce third results includes adding the first results to the fourth results.

4. The data processing system of claim 1 or 2, further comprising:

evaluating a third polynomial at the plurality of evaluation points to produce fourth results;
wherein applying the first function to the first input polynomial to produce the first output polynomial includes multiplying the first input polynomial and the third polynomial; and
wherein evaluating the second scalar function on the first results to produce third results includes multiplying the first results by the fourth results.

5. The data processing system of claim 1 or 2, further comprising:

selecting a plurality of coefficients for a third polynomial;
evaluating the third polynomial at the plurality of evaluation points to produce fourth results;
updating the first input polynomial by adding the third polynomial to the first input polynomial; and
updating the first results by adding the fourth results to the first results.

6. The data processing system of claim 5, further comprising:

applying a third function to the third polynomial, wherein the third function is based upon the first function to produce a fourth polynomial;
evaluating the fourth polynomial at the plurality of evaluation points to produce fifth results;
updating the first input polynomial by subtracting the fourth polynomial from the first input polynomial; and
updating the first results by subtracting the fifth results from the first results.

7. The data processing system of any preceding claim, wherein selecting a plurality of evaluation points includes randomly selecting the plurality of evaluation points.

8. The data processing system of any of claims 1 to 6, wherein selecting a plurality of evaluation points includes deterministically selecting the plurality of evaluation points.

9. The data processing system of any preceding claim, wherein the first input and first output polynomials are defined over a ring $R[X]/(f(X))$.

10. The data processing system of any preceding claim, wherein the first input and first output polynomials are defined over a ring $R[X]/(X^n + 1)$ and wherein selecting a plurality of evaluation points include selecting roots of unities.

11. A method of detecting faults in a polynomial operation, comprising:

selecting a plurality of evaluation points;
evaluating a first input polynomial at each of the plurality of evaluation points to produce first results;
applying a first function, F, to at least the first input polynomial to produce at least a first output polynomial;
evaluating the first output polynomial at each of the plurality of evaluation points to produce second results;
evaluating a second scalar function $F_y$ on each of the first results to produce third results, wherein the second scalar function $F_y$ corresponds to the first function F and can predict the evaluation results of the first output polynomial;

comparing the second results to the third results; and

performing a polynomial operation using the first output polynomial when the second results match the third results.

12. The method of claim 11, further comprising indicating a fault when the second results do not match the third results.

13. The method of claim 11 or 12, further comprising:

evaluating a third polynomial at the plurality of evaluation points to produce fourth results,
wherein applying the first function to the first input polynomial to produce the first output polynomial includes adding the first input polynomial to the third polynomial, and
wherein evaluating the second scalar function on the first results to produce third results includes adding the first results to the fourth results.

14. The method of any one of claims 11 or 12, further comprising:

evaluating a third polynomial at the plurality of evaluation points to produce fourth results;
wherein applying the first function to the first input polynomial to produce the first output polynomial includes multiplying the first input polynomial and the third polynomial; and
wherein evaluating the second scalar function on the first results to produce third results includes multiplying the first results by the fourth results.

## Patentansprüche

1. Datenverarbeitungssystem, das Anweisungen umfasst, die in einem nicht-flüchtigen computerlesbaren Medium konkretisiert sind, wobei die Anweisungen geeignet sind zum Erkennen eines Fehlers in einer Anwendung einer ersten Funktion, F, auf mindestens ein erstes Eingangspolynom als Teil eines kryptographischen Schemas, wobei die Anweisungen, wenn sie von einem Prozessor ausgeführt werden, den Prozessor veranlassen zum:

Auswählen einer Vielzahl von Auswertungspunkten;
Auswerten des ersten Eingangspolynoms an jedem der Vielzahl von Auswertungspunkten, um erste Ergebnisse zu erzeugen;
Anwenden der ersten Funktion, F, auf das erste Eingangspolynom, um ein erstes Ausgangspolynom zu erzeugen;
Auswerten des ersten Ausgangspolynoms an jedem der Vielzahl von Auswertungspunkten, um zweite Ergebnisse zu erzeugen;
Auswerten einer zweiten Skalarfunktion $F_y$ an jedem der ersten Ergebnisse, um dritte Ergebnisse zu erzeugen, wobei die zweite Skalarfunktion $F_y$ der ersten Funktion F entspricht und die Auswertungsergebnisse des ersten Ausgangspolynoms vorhersagen kann;
Vergleichen der zweiten Ergebnisse mit den dritten Ergebnissen; und
Durchführen einer Polynomoperation unter Verwendung des ersten Ausgangspolynoms, wenn die zweiten Ergebnisse mit den dritten Ergebnissen übereinstimmen.

2. Datenverarbeitungssystem nach Anspruch 1, das ferner ein Anzeigen eines Fehlers umfasst, wenn die zweiten Ergebnisse nicht mit den dritten Ergebnissen übereinstimmen.

3. Datenverarbeitungssystem nach Anspruch 1 oder 2, das ferner umfasst:

Auswerten eines dritten Polynoms an der Vielzahl von Auswertungspunkten, um vierte Ergebnisse zu erzeugen;
wobei das Anwenden der ersten Funktion auf das erste Eingangspolynom zum Erzeugen des ersten Ausgangspolynoms ein Addieren des ersten Eingangspolynoms zu dem dritten Polynom beinhaltet, und
wobei das Auswerten der zweiten Skalarfunktion an den ersten Ergebnissen zum Erzeugen von dritten Ergebnissen ein Addieren der ersten Ergebnisse zu den vierten Ergebnissen beinhaltet.

4. Datenverarbeitungssystem nach Anspruch 1 oder 2, das ferner umfasst:

Auswerten eines dritten Polynoms an der Vielzahl von Auswertungspunkten, um vierte Ergebnisse zu erzeugen; wobei das Anwenden der ersten Funktion auf das erste Eingangspolynom zum Erzeugen des ersten Ausgangspolynoms ein Multiplizieren des ersten Eingangspolynoms mit dem dritten Polynom beinhaltet, und wobei das Auswerten der zweiten Skalarfunktion an den ersten Ergebnissen zum Erzeugen von dritten Ergebnissen ein Multiplizieren der ersten Ergebnisse mit den vierten Ergebnissen beinhaltet.

5. Datenverarbeitungssystem nach Anspruch 1 oder 2, das ferner umfasst:

Auswählen einer Vielzahl von Koeffizienten für ein drittes Polynom;
Auswerten des dritten Polynoms an der Vielzahl von Auswertungspunkten, um vierte Ergebnisse zu erzeugen;
Aktualisieren des ersten Eingangspolynoms durch ein Addieren des dritten Polynoms zu dem ersten Eingangspolynom; und
Aktualisieren der ersten Ergebnisse durch ein Addieren der vierten Ergebnisse zu den ersten Ergebnissen.

6. Datenverarbeitungssystem nach Anspruch 5, das ferner umfasst:

Anwenden einer dritten Funktion auf das dritte Polynom, wobei die dritte Funktion auf der ersten Funktion basiert ist, um ein viertes Polynom zu erzeugen;
Auswerten des vierten Polynoms an der Vielzahl von Auswertungspunkten, um fünfte Ergebnisse zu erzeugen;
Aktualisieren des ersten Eingangspolynoms durch ein Subtrahieren des vierten Polynoms von dem ersten Eingangspolynom; und
Aktualisieren der ersten Ergebnisse durch ein Subtrahieren der fünften Ergebnisse von den ersten Ergebnissen.

7. Datenverarbeitungssystem nach einem der vorhergehenden Ansprüche, wobei das Auswählen einer Vielzahl von Auswertungspunkten ein zufälliges Auswählen der Vielzahl von Auswertungspunkten beinhaltet.

8. Datenverarbeitungssystem nach einem der Ansprüche 1 bis 6, wobei das Auswählen einer Vielzahl von Auswertungspunkten ein deterministisches Auswählen der Vielzahl von Auswertungspunkten beinhaltet.

9. Datenverarbeitungssystem nach einem der vorhergehenden Ansprüche, wobei das erste Eingangspolynom und das erste Ausgangspolynom über einen Ring $R[X]/(f(X))$ definiert sind.

10. Datenverarbeitungssystem nach einem der vorhergehenden Ansprüche, wobei das erste Eingangspolynom und das erste Ausgangspolynom über einen Ring $R[X]/(X^n + 1)$ definiert sind und wobei das Auswählen einer Vielzahl von Auswertungspunkten ein Auswählen von Einheitswurzeln beinhaltet.

11. Verfahren zum Erkennen von Fehlern in einer Polynomoperation, umfassend:

Auswählen einer Vielzahl von Auswertungspunkten;
Auswerten eines ersten Eingangspolynoms an jedem der Vielzahl von Auswertungspunkten, um erste Ergebnisse zu erzeugen;
Anwenden einer ersten Funktion, F, auf mindestens das erste Eingangspolynom, um ein erstes Ausgangspolynom zu erzeugen;
Auswerten des ersten Ausgangspolynoms an jedem der Vielzahl von Auswertungspunkten, um zweite Ergebnisse zu erzeugen;
Auswerten einer zweiten Skalarfunktion $F_y$ an jedem der ersten Ergebnisse, um dritte Ergebnisse zu erzeugen, wobei die zweite Skalarfunktion $F_y$ der ersten Funktion F entspricht und die Auswertungsergebnisse des ersten Ausgangspolynoms vorhersagen kann;
Vergleichen der zweiten Ergebnisse mit den dritten Ergebnissen; und
Durchführen einer Polynomoperation unter Verwendung des ersten Ausgangspolynoms, wenn die zweiten Ergebnisse mit den dritten Ergebnissen übereinstimmen.

12. Verfahren nach Anspruch 11, das ferner ein Anzeigen eines Fehlers umfasst, wenn die zweiten Ergebnisse nicht mit den dritten Ergebnissen übereinstimmen.

13. Verfahren nach Anspruch 11 oder 12, ferner umfassend:

Auswerten eines dritten Polynoms an der Vielzahl von Auswertungspunkten, um vierte Ergebnisse zu erzeugen;

wobei das Anwenden der ersten Funktion auf das erste Eingangspolynom zum Erzeugen des ersten Ausgangspolynoms ein Addieren des ersten Eingangspolynoms zu dem dritten Polynom beinhaltet, und
wobei das Auswerten der zweiten Skalarfunktion an den ersten Ergebnissen zum Erzeugen von dritten Ergebnissen ein Addieren der ersten Ergebnisse zu den vierten Ergebnissen beinhaltet.

**14.** Verfahren nach einem der Ansprüche 11 bis 12, das ferner umfasst:

Auswerten eines dritten Polynoms an der Vielzahl von Auswertungspunkten, um vierte Ergebnisse zu erzeugen;
wobei das Anwenden der ersten Funktion auf das erste Eingangspolynom zum Erzeugen des ersten Ausgangspolynoms ein Multiplizieren des ersten Eingangspolynoms mit dem dritten Polynom beinhaltet, und
wobei das Auswerten der zweiten Skalarfunktion an den ersten Ergebnissen zum Erzeugen von dritten Ergebnissen ein Multiplizieren der ersten Ergebnisse mit den vierten Ergebnissen beinhaltet.

**Revendications**

**1.** Système de traitement de données comprenant des instructions incorporées dans un support non transitoire lisible par ordinateur, les instructions permettant de détecter une défaillance dans une application d'une première fonction, F, à au moins un premier polynôme d'entrée dans le cadre d'un schéma cryptographique, les instructions, lorsqu'elles sont exécutées sur un processeur, amenant le processeur à :

sélectionner une pluralité de points d'évaluation ;
évaluer le premier polynôme d'entrée à chacun de la pluralité de points d'évaluation pour produire des premiers résultats ;
appliquer la première fonction, F, au premier polynôme d'entrée pour produire un premier polynôme de sortie ;
évaluer le premier polynôme de sortie à chacun de la pluralité de points d'évaluation pour produire des deuxièmes résultats ;
évaluer une deuxième fonction scalaire $F_y$ sur chacun des premiers résultats pour produire des troisièmes résultats, la deuxième fonction scalaire $F_y$ correspondant à la première fonction F et pouvant prédire les résultats d'évaluation sur le premier polynôme de sortie ;
comparer les deuxièmes résultats aux troisièmes résultats ; et
exécuter une opération polynomiale en utilisant le premier polynôme de sortie lorsque les deuxièmes résultats correspondent aux troisièmes résultats.

**2.** Système de traitement de données selon la revendication 1, comprenant en outre l'indication d'une défaillance lorsque les deuxièmes résultats ne correspondent pas aux troisièmes résultats.

**3.** Système de traitement de données selon la revendication 1 ou 2, comprenant en outre :

l'évaluation d'un troisième polynôme à la pluralité de points d'évaluation pour produire des quatrièmes résultats ;
l'application de la première fonction au premier polynôme d'entrée pour produire le premier polynôme de sortie incluant l'addition du premier polynôme d'entrée au troisième polynôme, et
l'évaluation de la deuxième fonction scalaire sur les premiers résultats pour produire des troisièmes résultats incluant l'addition des premiers résultats aux quatrièmes résultats.

**4.** Système de traitement de données selon la revendication 1 ou 2, comprenant en outre :

l'évaluation d'un troisième polynôme à la pluralité de points d'évaluation pour produire des quatrièmes résultats ;
l'application de la première fonction au premier polynôme d'entrée pour produire le premier polynôme de sortie incluant la multiplication du premier polynôme d'entrée et du troisième polynôme ; et
l'évaluation de la deuxième fonction scalaire sur les premiers résultats pour produire des troisièmes résultats incluant la multiplication des premiers résultats par les quatrièmes résultats.

**5.** Système de traitement de données selon la revendication 1 ou 2, comprenant en outre :

la sélection d'une pluralité de coefficients pour un troisième polynôme ;
l'évaluation du troisième polynôme à la pluralité de points d'évaluation pour produire des quatrièmes résultats ;
la mise à jour du premier polynôme d'entrée par addition du troisième polynôme au premier polynôme d'entrée ; et

la mise à jour des premiers résultats par addition des quatrièmes résultats aux premiers résultats.

6. Système de traitement de données selon la revendication 5, comprenant en outre :

l'application d'une troisième fonction au troisième polynôme, la troisième fonction étant basée sur la première fonction pour produire un quatrième polynôme ;
l'évaluation du quatrième polynôme à la pluralité de points d'évaluation pour produire des cinquièmes résultats ;
la mise à jour du premier polynôme d'entrée par soustraction du quatrième polynôme au premier polynôme d'entrée ; et
la mise à jour des premiers résultats par soustraction des cinquièmes résultats aux premiers résultats.

7. Système de traitement de données selon l'une quelconque des revendications précédentes, dans lequel la sélection d'une pluralité de points d'évaluation inclut la sélection aléatoire de la pluralité de points d'évaluation.

8. Système de traitement de données selon l'une quelconque des revendications 1 à 6, dans lequel la sélection d'une pluralité de points d'évaluation inclut la sélection déterministe de la pluralité de points d'évaluation.

9. Système de traitement de données selon l'une quelconque des revendications précédentes, dans lequel les premiers polynômes d'entrée et de sortie sont définis sur un anneau $R[X]/(f(X))$.

10. Système de traitement de données selon l'une quelconque des revendications précédentes, dans lequel les premiers polynômes d'entrée et de sortie sont définis sur un anneau $R[X]/(X^n + 1)$ et dans lequel la sélection d'une pluralité de points d'évaluation inclut la sélection de racines d'unités.

11. Procédé de détection de défaillances dans une opération polynomiale, comprenant :

la sélection d'une pluralité de points d'évaluation ;
l'évaluation d'un premier polynôme d'entrée à chacun de la pluralité de points d'évaluation pour produire des premiers résultats ;
l'application d'une première fonction, F, au moins au premier polynôme d'entrée pour produire au moins un premier polynôme de sortie ;
l'évaluation du premier polynôme de sortie à chacun de la pluralité de points d'évaluation pour produire des deuxièmes résultats ;
l'évaluation d'une deuxième fonction scalaire $F_y$ sur chacun des premiers résultats pour produire des troisièmes résultats, la deuxième fonction scalaire $F_y$ correspondant à la première fonction F et pouvant prédire les résultats d'évaluation du premier polynôme de sortie ;
la comparaison des deuxièmes résultats aux troisièmes résultats ; et
l'exécution d'une opération polynomiale en utilisant le premier polynôme de sortie lorsque les deuxièmes résultats correspondent aux troisièmes résultats.

12. Procédé selon la revendication 11, comprenant en outre l'indication d'une défaillance lorsque les deuxièmes résultats ne correspondent pas aux troisièmes résultats.

13. Procédé selon la revendication 11 ou 12, comprenant en outre :

l'évaluation d'un troisième polynôme à la pluralité de points d'évaluation pour produire des quatrièmes résultats ;
l'application de la première fonction au premier polynôme d'entrée pour produire le premier polynôme de sortie incluant l'addition du premier polynôme d'entrée au troisième polynôme, et
l'évaluation de la deuxième fonction scalaire sur les premiers résultats pour produire des troisièmes résultats incluant l'addition des premiers résultats aux quatrièmes résultats.

14. Procédé selon l'une quelconque des revendications 11 à 12, comprenant en outre :

l'évaluation d'un troisième polynôme à la pluralité de points d'évaluation pour produire des quatrièmes résultats ;
l'application de la première fonction au premier polynôme d'entrée pour produire le premier polynôme de sortie incluant la multiplication du premier polynôme d'entrée et du troisième polynôme ; et
l'évaluation de la deuxième fonction scalaire sur les premiers résultats pour produire des troisièmes résultats incluant la multiplication des premiers résultats par les quatrièmes résultats.

$$P(X) \xrightarrow{F^{(0)}} P_F(X) \xrightarrow{F^{(1)}} \cdots$$

$$\Big\downarrow \text{EVAL. AT } x \qquad \Big\downarrow \text{EVAL. AT } x$$

$$P(x) \xrightarrow{F_y^{(0)}} P_F(x) \xrightarrow{F_y^{(1)}} \cdots$$

## FIG. 1

$P_1(X)$

200

205

| MULTIPLICATION | ← $P_2(X)$ |

$Q_1(X) \longrightarrow$

210

| REFRESH |

215

| MULTIPLICATION | ← $P_3(X)$ |

220

| REFRESH$^{-1}$ |

225

| ADDITION | ← $P_4(X)$ |

230

| MULTIPLICATION | ← $P_5(X)$ |

$P_6(X)$

## FIG. 2

FIG. 3

FIG. 4

**EP 4 387 156 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 11139971 B2